# EUROPEAN PATENT APPLICATION

(11) **EP 4 091 448 A1**
(43) Date of publication of application: **23.11.2022**
(21) Application number: 21174695.3
(22) Date of filing: 19.05.2021
(51) Int. Cl.: A01N 43/16, A01N 25/00, A01P 7/04

(54) **USE OF QUASSIA-EXTRACT FOR A SEED TREATMENT AS INSECTICIDE**

(71) Applicant: KWS SAAT SE & Co. KGaA, 37574 Einbeck (DE)
(72) Inventor: HOLZFUß, Constanze, 37574 Einbeck (DE)
(74) Representative: Heubeck, Christian

(57) **Abstract**

The present invention relates to the protection of seed and plants from damage caused by insects. Treatment with *Quassia* extract or quassinoid(s) provides seeds, which are protected against insects, especially wireworms.

## Description

The present invention relates to the protection of seed and plants from damage caused by insects. Treatment with Quassia extract provides seeds which are protected against insects, especially *Agriotes spp.,* grain beetle or cabbage stem flea beetle.

A pest for seeds are insects and insect larvae, which also frequently cause damage due to feeding on seed. Examples of such insect pests are wireworms. Wireworms are the larvae of click beetles (*Coleoptera*: *Elateridae*)*.* They consist of more than 9,000 species distributed worldwide, and some are important pests of a wide variety of crops, such as corn, potato, cereals, carrot, sugar beet, sugarcane and soft fruits. In Europe, damages due to wireworm infestation are mainly attributed to the genus *Agriotes* Eschscholtz. It comprises more than 200 species worldwide, including more than 100 in the Palearctic region. *Agriotes* communities were widely distributed across the continent. The genus *Melanotus* Eschscholtz is well studied in Japan (*Melanotus okinawensis Ohira*) and in the USA (*Melanotus communis* (Gyll.)). The "Pacific coast" wireworm, *Limonius canus* Leconte, is responsible, with other species of the genus, for crop damage alongside the western coast of North America. Other genera important for their impact on agriculture are *Athous* Eschscholtz, *Conoderus* Eschscholtz, *Ctenicera* Latreille and *Hypolithus* Eschscholtz.

The main effects of wireworm feeding on neck and belowground plant organs are seedling mortality and all implied yield losses. Wireworm larvae may feed for instance on the germ of corn kernels or completely hollow out the seeds, leaving only the seed coat. This damage results in gaps in the rows. Wireworms may also cut off small roots or tunnel into the underground portions of the root or stem of young corn plants. These plants will appear stunted or wilted with the whorl leaves wilting first.

Wireworm damage occurs mainly during the early stages of plant growth. Damage commonly occurs when crop plants are planted early and the weather turns cold, slowing seed germination. Wireworm infestations are usually noted in areas of a field that stay moist for long periods of time.

Wireworms are often not very specific to certain crops, e.g., corn wireworms also attack carrots (*Daucus carota*)*,* cucurbits, rutabagas (*Brassica napus*)*,* onions (*Allium cepa*)*,* sugar beets (*Beta vulgaris*)*,* beans (*Phaseolus vulgaris*)*,* soybeans (*Glycine max*)*,* peas (*Pisum sativum*)*,* peppers (*Capsicum spp.*) and celery (*Apium graveolens*) (Bessin and Townsend 2004, Chaput 2011, Wilson 1940). Other wireworms attack amongst above crops also cabbage, sugarcane (*Saccharum officinarum*)*,* potatoes (*Solanum tuberosum*)*,* sweet potatoes (*Ipomoea batatas*)*,* wheat (*Triticum aestivum*)*,* sorghum (*Sorghum bicolor*)*,* grasses, small grain crops, flower and vegetable crops (Sorensen and Baker 1994).

Wireworm management in corn and other crops is generally by seed treatment or treatment at the time of planting. Cultural practices - like crop rotation, flooding, or cultivation - are generally ineffective because wireworms have a wide host range and are adaptable to different environments. Delaying planting to allow soils to dry and warm may improve corn emergence because wireworms retreat deeper in the soil under these conditions, but this is a management practice that may not always be possible.

Another important insect pest is grain beetle (*Zabrus tenebrioides*) which damages all cereal crops, in particular the early varieties (winter varieties) suffer from this pest. The larvae as well as the beetle damage especially the leaf tissues from the cereal crops. In oilseed rape, the cabbage stem flea beetle (*Psylliodes chrysocephala*) is an issue. A lack of effective chemical options in oilseed rape has accelerated the rise of cabbage stem flea beetle. This beetle is now pest enemy number one in this crop and can destroy a plant's growing point and cause crop failure.

Many insecticides that are commonly used to protect seeds have the disadvantage that they are also dangerous for non-target insects, in particular honeybees. Information from standard tests and field studies, as well as incident reports involving neonicotinoid insecticides (e.g., clothianidin) suggest the potential for long term toxic risk to honey bees and other beneficial insects. Force 20 cs (www.syngenta.de/produkte/pflanzenschutz/saatgutbehandlung/ force-20-cs; main active agent is *Tefluthrin*) is an insecticide usable in the EU. Neonicotinoids like Thiametoxam, Clothianidin, Imidacloprid are used still outside of EU 27 countries.

In organic agriculture there is no effective method to protect plants against insects like *Agriotes spp..* Especially in the EU, due to regulatory issues it is planned that chemical plant protection products shall be reduced by 50% until 2030. Organic Agriculture is a production system that sustains the health of soils, ecosystems, and people. It relies on ecological processes, biodiversity and cycles adapted to local conditions, rather than the use of inputs with adverse effects. Organic Agriculture combines tradition, innovation, and science to benefit the shared environment and promote fair relationships and good quality of life for all involved (https://www.ifoam.bio/why-organic/organic-landmarks/definition-organic). Thus, a further reduction of registered active substances is very likely while the use of organic agriculture as well as environment-friendly compositions attract high interests. In these regards, all neonicotinoids have been banned. Further products containing ingredients for substitution are highly requested.

Thus, it was the problem underlying the present invention to provide a seed treatment which is suitable for protecting seed from damage caused by insects, in particular caused by wireworms, preferably without impairing germination ability of the seeds. Compromising germination and quality of seed can lead to significantly lower yields. Particularly desirable in this context would be substances that protect seed and seedlings, but are safe for consumption of the plants and preferably longer detectable in the mature plant.

*Quassia amara,* also known as amargo, bitter-ash, bitter-wood, is a species in the genus *Quassia,* with some botanists treating it as the sole species in the genus. The bitter principle found in the bark and wood is used as the basis of *Angostura* Bitters, which is used as a flavoring in long drinks, soft drinks, digestive tonics and also in gin-based drinks. It can be used as a substitute for hops in beer manufacturing or can be added to baked goods. Traditionally, Q. *amara* is widely used as a digestive, to treat fever, and against hair parasites (lice, fleas) and mosquito larvae in ponds (which has not proven harmful to fish populations). In medicine, it has been found that Q. *amara* extract reduced the elevated fasting blood glucose in rats. It also shows that glucose tolerance is increased by the consumption of Q. *amara.* The wood powder of Q. *amara* shows an anti-hyperglycemic effect, similar to the one from metformin. Quassin (IUPAC name 2,12-dimethoxypicrasa-2,12-diene-1,11,16-trione) is a white bitter, crystalline substance that is the prototypical example of the family of quassinoids. It can be extracted from the quassia tree, from which it gets its name. It was first isolated in 1937 and its chemical structure was elucidated in 1961. It is one of the most bitter substances found in nature, with a bitter threshold of 0.08 ppm and it is 50 times more bitter than quinine. Extracts of the bitterwood tree (*Quassia amara*) containing quassin are for instance used as additives in soft drinks. Commercial quassin, representing approximately 0.2% of the dry wood, varies in its constituents depending on the source but consists mainly of quassin and neoquassin. The threshold bitterness of quassin is 0.06 ppm which is 1670 times more bitter than caffeine, and therefore it is sometimes used as an alternative to quinine.

Pesticides containing components from *Quassia* have been suggested in the art. When used correctly on newly hatched larvae (immediately after blooming), good effects comparable to Diazinon were achieved. When used early during oviposition (full bloom), however, the effect was insufficient. Results against aphids varied depending on the species and the time of treatment. The development of the mealy apple aphid (*Dysaphis plantaginea*) was inhibited, but the effect was not sufficient. (Höhn et al. (1996): Quassia und Neem: exotische Insektizide im Obstbau. Schweiz. Z. Obst-Weinbau, 3, 62-63, Eggler et al. (1996): Quassia-Extrakt; neue Erkenntnisse bei der Regulierung von Schaderregern im Obstbau. Mitt. d. Biol. Bundesanst., 321, 425; Eggler et al. (1992): Biologisch aktive Pflanzenauszuge; eine natürliche Alternative bei der Behandlung von Schaderregern im Obstbau. 5. Internationaler Erfahrungsaustausch über Forschungsergebnisse zum Okologischen Obstbau, 19. und 20.11.1992, Hrsg. Fordergemeinschaft Okologischer Obstbau, Baden-Württemberg, Ministerium für ländlichen Raum, Landwirtschaft und Forsten, 28; Daido et al. (1993): Antifeedant and insecticidal activity of Quassionids against Diamondback Moth (Plutella xylostella). Biosci. Biotech. Biochem., 57, 2, 244-246). GB 2213724A suggests beside other bitter agents also the use of Quassia extract as insect repellent. Such agents may be applied as a spray to a crop or to a garden or other area or object (for example a lamp post) to repel animals and/or birds and/or insects. So far, however, it has never been proposed to use *Quassia* extract as a seed treatment.

In the present invention, it was surprisingly found, that *Quassia* extract offers excellent protection for seed against damage caused by insects and insect larvae, in particular against wireworm, grain beetle or cabbage stem flea beetle. The activity of *Quassia* extract as insect repellent, preferably as wireworm, grain beetle or cabbage stem flea beetle repellent, was comparable with standard insecticides like tefluthrin, and clothianidin. Furthermore, it is favourable in that it is harmless to beneficial insects.

In addition, it was found that *Quassia* extract has a systemic effect on the crop plants like corn, oilseed rape, beet (*Beta vulgaris*) and cereals, for instance rye. This results in protection of the seed but also the emerged young seedlings. Since the *Quassia* extract is diluted over the time of growing and ripening, the harvested crop, e.g. the cobs of corn, seeds of rapeseed or kernels of rye, do not show amounts of *Quassia* components which affect the post-harvest usage of these crops, e.g. for animal feeding or silage purposes. Further, it was found that treatment with *Quassia* extract is safe on the seed and there is no degradation of germination or quality of the seed. The ingredient that is primarily responsible for the insect-repellent effect of *Quassia* extract is quassin (2,12-dimethoxypicrasa-2,12-diene-1,11,16-trione).

Furthermore, it was found that besides quassin, other quassinoids also provide the same beneficial effect of protecting seed against damage caused by insects and insect larvae, in particular against wireworm, grain beetle or cabbage stem flea beetle. Quassinoids are a group of structurally complex and highly oxygenated degraded triterpenes. They are divided into five groups according to their basic skeleton: C-18, C-19, C-20, C-22, and C-25. Examples of quassinoids are neoquassin, nigakihemiacetal A, quassimarin, samaderines and simalikalactones.picrasin K, simalikalactone E, simalikalactone D, samaderin B and bruceantin.

Thus, in a first aspect the present invention provides a composition comprising *Quassia* extract or at least one quassinoid for protection of seed and plants from damage caused by insects, in particular wireworms (*Agriotes spp*.). To achieve adhesion to the seed, a seed treatment composition according to the invention further comprises a sticking agent and optionally additional additives and active ingredients as described in more detail below.

Another aspect of the present invention is the use of *Quassia* extract or at least one quassinoid or a composition comprising *Quassia* extract or at least one quassinoid for protection of seed and plants, in particular seedlings, from damage caused by insects, in particular wireworms (*agriotes spp*.).

A further aspect of the invention is a seed of a plant treated with a composition comprising *Quassia* extract or at least one quassinoid, wherein the *Quassia* extract or components of the extract, or the at least one quassinoid, in particular quassin, is adsorbed on the seed and/or absorbed into the seed. Hence, *Quassia* extract or components thereof, in particular quassin, or other quassinoid(s) may be present on the surface of seed, inside the seed or at both locations. If *Quassia* extract or components thereof or at least one quassinoid, in particular quassin, is present on the surface of seed the wording *"the seed is coated with"* is used alternatively in the present application. The term *"coated"* does not mean, however, that seed is completely covered by *Quassia* extract or components thereof or at least one quassinoid, but refers to the fact that components from *Quassia* such as quassin (or at least one other quassinoid) adhere to at least part of the surface of the seed.

According to a preferred embodiment of the invention, *Quassia* extract or components thereof, in particular quassin, or at least one other quassinoid is at least partially absorbed into the seed. *Quassia* extract (or at least one quassinoid) is thus at least partially, taken up by the seed but can also remain partially on the outside. The absorption of *Quassia* extract or components thereof or at least one quassinoid into the seed prevents the active agent from being washed off the surface of the seed, for example by rain, or rubbed off mechanically and allows the insect repellent activity to be maintained.

According to the invention, *Quassia* extract or at least one quassinoid can be used as a single active agent or optionally in combination with one or more further active agents and/or additives. One or more active agents that can be employed may be any agent, preferably a chemical agent that produces a desired effect on the seed, the plant that ultimately emerges from the seed, or both. Non-limiting examples of such chemical agents include pesticides (such as fungicides, acaricides, miticides, insecticides, insect repellents, rodenticides, molluscicides, nematicides, bactericides, and fumigants), herbicides, chemical hybridizing agents, auxins, antibiotics and other drugs, biological attractants, growth regulators, pheromones and dyes. Specific non-limiting examples of chemical agents useful as active ingredients include triticonazole, imidacloprid, tefluthrin, and silthiophenamide (N-allyl-4,5-dimethyl-2-trimethylsilylthiophene-3-caboxamide). Further active agents suitable for use in the present invention are, for example, phytochemicals and antimicrobial agents suitable to protect plant seed. Preferred examples thereof are bactericides, antiparasitics and fungicides such as metalaxyl, metalaxyl-M, ipconazole, thiram, zirame, fludioxonil, prothioconazole, and combinations thereof, preferably Redigo M, Maxim XL, Maxim Quattro, Lumiflex, Thiram and/or Korit. In a particular preferred embodiment, denatonium benzoate, which has an excellent repellant effect against birds and insects, is included as an additional active agent.

Potential additives may be sticking agents that improve adhesion of *Quassia* extract or at least one quassinoid to plant seed. Particularly preferred are sticking agents that are non-hazardous, preferably sticking agents based on natural resins such as SatecWFO20, COMBICOAT or Satec C, sticking agents based on lignin sulfonate such as Satec WWL, sticking agents based on polymers such as Satec RHI and/or water-based sticking agents such as Sepiret^{®}, Peridiam^{®} Quality or Peridiam^{®} Active, Disco L-450; Disco L-1101, Agifix, FKL (FMC), and others. Further exemplary additives are fillers or bulking agents, and binders. Additionally, a talc or graphite powder can be added to keep the seeds from clumping.

According to the invention, seeds of any plants, in particular crops such as corn, sorghum, rapeseed, rye, wheat, barley or beet, can be protected from insects with the composition comprising *Quassia* extract or at least one quassinoid. The term "corn" as used herein means a plant of the species Zea *mays.* The term corn is interchangeable with Zea *mays* and maize. The term "rapeseed" or "oilseed rape" as used herein means a plant of the species *Brassica napus.* The term "rye" as used herein means a plant of the species *Secale cereale.* The term "sorghum" as used herein means a plant of the species *Sorghum bicolor.* The term "wheat" as used herein means a plant of the species *Triticum aestivum* or *Triticum durum.* The term "barley" as used herein means a plant of the species *Hordeum vulgare.* The term "beet" as used herein means a plant of the species *Beta vulgaris* including for example sugar beet, fodder beet, red beet, or swiss chard.

A seed of a plant according to the present invention preferably contains *Quassia* extract or components thereof or at least one quassinoid, in particular quassin, in an amount effective to repel insects and insect larvae and thus provide protection against damage caused by insects. In particular, the amount of *Quassia* extract or components thereof, or at least one quassinoid, in particular quassin, on and/or in a seed according to the present invention is effective to repel insects and insect larvae such as wireworms, grain beetle or cabbage stem flea beetle, but not affect them in terms of health. The *Quassia* extract or quassinoid is also not harmful to the health of other animals that may come into contact with seeds according to the invention.

For the purposes of the invention, the term *"insects"* shall in principle encompass all types of insects in any stage of development, including adults and larvae. Advantageously, harmful insects such as wireworms, grain beetle or cabbage stem flea beetle are repelled and thus prevented from feeding on the seed or developing plant parts. Thus, preferably the term insect means wireworm(s), grain beetle (*Zabrus tenebrioides*) or cabbage stem flea beetle (*Psylliodes chrysocephala*).

According to the invention, wireworms mean the larvae of click beetle belonging to insects in the family *Elateridae.* Other names for click beetle include elaters, snapping beetles, spring beetles or skipjacks. There are about 9300 known species worldwide, and 965 valid species in North America. Wireworms as used herein are agricultural pests. Larvae are elongate, cylindrical or somewhat flattened, with hard bodies. The three pairs of legs on the thoracic segments are short and the last abdominal segment is, as is frequently the case in beetle larvae, directed downwards and may serve as a terminal proleg in some species. The ninth segment, the rearmost, is pointed in larvae of *Agriotes, Dalopius* and *Melanotus,* but is bifid due to a so-called caudal notch in *Selatosomus* (formerly *Ctenicera*)*, Limonius, Hypnoides* and *Athous* species. The dorsum of the ninth abdominal segment may also have sharp processes, such as in the Oestodini, including the genera *Drapetes* and Oestodes. Although some species complete their development in one year (e.g. *Conoderus*)*,* most wireworms spend three or four years in the soil, feeding on decaying vegetation and the roots of plants, and often causing damage to agricultural crops such as potato, strawberry, corn, and wheat. According to the present invention, the term wireworm may be understood as larvae of click beetle belonging to a genus selected from the group consisting of *Agriotes*, *Dalopius, Melanotus, Selatosomus, Limonius, Hypnoides, Hypolithus, Athous, Drapetes, Oestodes* or *Conoderus.*

A further advantage of the seed according to the present invention, which has been treated with *Quassia* extract or a composition comprising *Quassia* extract, or at least one quassinoid, is that the germination capacity of the seed is comparable with untreated seed of the same species or the same genotype. Healthy growing seedlings and plants develop from the seed according to the invention to preferably at least the same extent as from untreated seed. A comparable level of germination capacity means that treated seeds of a plant variety exhibits a germination rate which deviates at maximum +/- 10% from the germination rate of untreated seeds of the same plant variety, preferably the germination rate deviates at maximum +/-5% from the germination rate of untreated seeds of the same plant variety, more preferably the germination rate deviates at maximum +/- 3% from the germination rate of untreated seeds of the same plant variety.

As used herein, a seed, a plant or a part thereof may be derived from any plant species, preferably the a seed, a plant or a part thereof belongs to a species selected from the group consisting of carrot *(Daucus carota),* cucumber (*Cucumis sativus), Cucurbita argyrosperma, Cucurbita ficifolia, Cucurbita maxima, Cucurbita moschata,* watermelon (*Citrullus lanatus*)*, Cucurbita pepo,* strawberry (*Fragaria* × *ananassa*)*,* rape seed (*Brassica napus*)*,* cabbage (*Brassica oleracea*), onions (*Allium cepa*)*,* sugar beets, swiss chard or red beet (*Beta vulgaris*)*,* beans (*Phaseolus vulgaris*)*,* soybeans (*Glycine max*)*,* peas (*Pisum sativum*)*,* peppers (*Capsicum* spp.), spinach (*Spinacia oleracea*)*,* celery (*Apium graveolens*)*,* cabbage, sugarcane (*Saccharum officinarum*)*,* potato (*Solanum tuberosum*)*,* tomato (*Solanum lycopersicum*)*,* sweet potatoes (*Ipomoea batatas*)*,* wheat (*Triticum aestivum*)*,* sorghum (*Sorghum bicolor*)*,* corn (Zea *mays*)*,* barley (*Hordeum vulgare*) or rye (Seca/e *cereale*)*.* More preferably a seed, a plant or a part thereof belongs to a species selected from the group consisting of rape seed (*Brassica napus*)*,* cabbage (*Brassica oleracea*)*,* sorghum (*Sorghum bicolor*)*,* corn (Zea *mays*)*,* barley (*Hordeum vulgare*)*,* sugar beet or rye (Seca/e *cereale*).

A further aspect of the present invention is a plant or a part thereof grown from the seed according to the invention. Since *Quassia* extract and quassinoids surprisingly have systemic effects and may, at least partly, be absorbed into the seed, it is still present in emerged young seedlings. The concentration in seedlings is usually lower than in the seed from which the seedling is grown. Since the *Quassia* extract or quassinoid is diluted over the time of growing and ripening, the harvested crop, e.g. the cobs, leaves, roots, tubers or any fruit, do not show amounts of *Quassia* extract or components thereof, or quassinoid(s), in particular quassin, which affect the post-harvest usage, e.g. for animal feeding, food/feed production, silage purposes or human consumption.

In addition to *Quassia* extract or components thereof, in particular quassin, or other quassinoid(s), the plant or parts thereof according to the invention may additionally contain one or more further active agents and/or additives. These additional active agents and/or additives are preferably those mentioned above in the context of the seed, in particular denatonium benzoate. Depending on the extent to which these further active agents and/or additives are absorbed by the seed, their concentration in a plant or part thereof may vary. Active agents and additives that are not or only to a small amount absorbed by seed may still be present on the surface of the plant or parts thereof.

The term "seedling" as used in the present application means a plant from emergence to the three-leaves-stage for monocotyledonous plants or the stage of the development of the second pair of secondary leaves for dicotyledonous plants, preferably the first pair of secondary leaves. Preferably a seedling of a monocotyledonous species like Zea *mays* or *Secale cereale* is in a developmental stage from emergence (i.e., the coleoptile penetrates soil surface (cracking stage)) to the developmental stage of V3 (i.e., three leaves unfolded), more preferred the developmental stage of V2 (i.e., two leaves unfolded).

As used herein, middle-aged development stage of a plant means a development stage after germination and seed emergence and seedling phase but before ripening and harvesting. Preferably, at this stage the plant contains six to eight fully emerged leaves. More preferably, the reproductive stage in the plant begins. The reproductive stage of development in plants occurs after the juvenile stage is completed. At this stage, the plants are considered mature, that is, they are physiologically capable of commencing the production of reproductive parts: the flowers, fruits and seeds. This stage consists of the period from the time that the plant starts to form inflorescence or flower primordia until flowering, pollination, and fertilization.

In another particular embodiment of the invention, the plant is a seedling and contains denatonium benzoate, in addition to *Quassia* extract or components thereof, in particular quassin, or other quassinoids, in a mean amount of 1 to 100 µg per plant, preferably 1 to 40 µg per plant, more preferably 2 to 25 µg per plant, even more preferably 5 to 15 µg per entire plant. A further embodiment is a seedling containing denatonium benzoate in a mean amount of 0.01 to 1 µg per sprout of the seedling, preferably 0.01 to 0.5 µg per sprout of the seedling, more preferably 0.03 to 0.3 µg per sprout of the seedling, even more preferably 0.05 to 0.2 µg per sprout of the seedling. The amounts of *Quassia* extract or components thereof, in particular quassin, or other quassinoids in combination with denatonium benzoate in the developing plants, e.g. in the seedlings, are still sufficient to repel insects, in particular wireworms, grain beetle or cabbage stem flea beetle.

In another specific aspect of the present invention, the Quassia extract was used for treatment of corn, the concentration of Quassia extract is in the range of 1-500 g/u, preferably in the range of 25-400 g/u, more preferably of 50-200 g/u, and in case Quasaan is used, the concentration of Quassan is in the range of 1-50 g/u, preferably of 1-25 g/u, more preferably of 10 g/u, (1 u = 50,000 grains = 15 Kg at thousand kernel weight of 300 g).

In further specific aspect of the present invention, the Quassia extract was used for treatment of sorghum, the concentration of Quassia extract is in the range of 1-50 g/u, preferably in the range of 2-25 g/u, more preferably of 6-10 g/u, and in case Quasaan is used, the concentration of Quassan is in the range of 1-50 g/u, preferably of 1-25 g/u, more preferably of 1-10 g/u, (1 u = 250,000 grains = 7,5 Kg at thousand kernel weight of 30 g).

The quassan is a commercial product, which contains 30% of quassia extract (cf. https-//www.biocontrol.ch/de_bc/quassan).

A further aspect of the present invention is the use of *Quassia* extract or at least one quassinoid for protecting a seed of a plant or a plant, preferably a seedling, from damage caused by insects. For this purpose, *Quassia* extract or at least one quassinoid can optionally be combined with one or more further agents and/or additives, preferably those defined above with reference to the seed according to the invention, in particular denatonium benzoate. In principle, *Quassia* extract or at least one quassinoid can be applied to the seed or plant or can be applied together with the seed during sowing on agricultural area. Pre-treatment of the seed is preferred, as the required amount of *Quassia* extract or quassinoid is then significantly lower than if it was only applied during sowing.

Furthermore, the present invention refers to a method of protecting a seed against damage caused by insects, the method comprising contacting the seed with *Quassia* extract or at least one quassinoid or a composition comprising *Quassia* extract or at least one quassinoid. Optionally, *Quassia* extract can be combined with one or more further active agents and/or additives as described hereinabove, in particular denatonium benzoate.

*"Contacting"* as used in the present invention means that a seed is somehow brought into contact with *Quassia* extract or at least one quassinoid or the composition comprising *Quassia* extract or at least one quassinoid. The contacting may result in a more or less continuous coating of the seed. In terms of the invention, coating does not necessarily mean that the seed surface is completely coated with *Quassia* extract or at least one quassinoid, but includes any kind of adhesion of *Quassia* extract or at least one quassinoid to any part of the seed surface. There does not necessarily have to be direct contact between *Quassia* extract or at least one quassinoid and the seed surface, but adhesion can in principle also occur via any intermediate layers or substances.

Any method known in the art can be used for contacting seed with *Quassia* extract or at least one quassinoid or a composition comprising *Quassia* extract or at least one quassinoid in order to apply the active agent to the seed. Exemplary techniques suitable for effectively applying the extract or composition uniformly over the seed surface and uniformly from seed-to-seed are pelleting and film coating methods. Pelleting is defined as the deposition of a layer of inert materials that may obscure the original shape and size of the seed, resulting in a substantial weight increase and improved plantability. Film coating retains the shape and the general size of the raw seed with minimal weight gain.

Seed pelleting consists of the application of solid particles that act as a filler (e.g., diatomaceous earth, calcium carbonate, or silica) or bulking agent with a binder or sticking agent to form a more or less spherically shaped dispersal unit. The pelleting process is commonly performed in a coating pan or tumbling drum. Binders or sticking agents can be mixed with water and sprayed onto the seeds, or blended dry with the filler. Coating formulations can be blends of binders or sticking agents and fillers, formulated as dry powders. In an alternating manner, powder is dusted and water sprayed onto seeds during the coating operation. Water temporarily binds the pellet and activates the sticking agent. Pelleting is a wet operation and therefore pellets must be dried at the completion of the coating process.

Binders for use in seed coating compositions are well-known in the art and examples thereof include water-soluble polymers, such as polyvinyl acetate, polyvinyl alcohol, polyvinyl pyrrolidone, polyurethane, methyl cellulose, carboxymethyl cellulose, hydroxylpropyl cellulose, sodium alginate, polyurethane, polyacrylate, casein, gelatin, pullulan, polyacrylamide, polyethylene oxide, polystyrene, styrene acrylic copolymers, styrene butadiene polymers, and poly(N-vinylacetamide). Also waxes such as carnauba wax, paraffin wax, polyethylene wax, bees wax, and polypropylene wax can be used as a binder or as an extra flow additive. Also, ethylene vinyl acetate can suitably be used as a binder.

Film coating of seeds consists of spraying a solution or suspension of film-forming polymer onto seeds to achieve a uniform deposition of materials. Coating pans used for pelleting may also be used; however, in contrast to the wet operation of pelleting, the aqueous film-forming formulation must be dried immediately after spraying to avoid agglomeration.

Both pelleting and film coating can serve as a delivery system for *Quassia* extract or at least one quassinoid and optionally further active agents and/or additives at high-loading rates. In the case of pelleting, the active ingredients, formulated as dry powders, can be applied in the outer pellet layers. Final coating applications with filler material encapsulate the plant protectants and prevent worker exposure to the active ingredients.

In a preferred aspect of the invention, *Quassia* extract is used in an amount of 10g to 500 g/50,000 corn seeds, 20 to 300 g/50,000 corn seeds, or 50g to 200g/50,000 corn seeds, in particular 80g to 150g/50,000 corn seeds. In case *Quassia* extract is used as a single active agent against insect damage, the amount of *Quassia* extract used according to the invention is preferably 50g to 200g/50,000 corn seeds. When *Quassia* extract is used in combination with one or more further active agents, in particular denatonium benzoate, a lower amount of *Quassia* extract may be sufficient.

Basically, *Quassia* extract or at least one quassinoid or a composition comprising *Quassia* extract or at least one quassinoid may be applied in any form. For example, it can be used as a solid powder or as a liquid composition or as a concentrated solution. Preferably, a liquid composition for use according to the invention further comprises one or more sticking agents. Additionally, a liquid composition may include one or more further active agents or additives, preferably as described hereinabove. Alternatively or additionally, it is possible to apply further active agents in a separate composition to the seed. In this case, the treatment with the additional active agent(s) can take place before or after the treatment with *Quassia* extract or at least one quassinoid or the composition comprising *Quassia* extract or at least one quassinoid or simultaneously.

A still further aspect of the present invention relates to a method for providing a plant protected against damage caused by insects, the method comprising
a) providing a seed of a plant as described above or a seed obtained or obtainable according to the method described hereinabove, and
b) growing a plant from the seed of a).

The seed provided in step (a) need not be treated with *Quassia* extract or at least one quassinoid or the composition comprising *Quassia* extract or at least one quassinoid immediately before the method is carried out, but seed may be used which has been treated and then stored at some earlier stage.

The conditions for growing the plant in step b) correspond to the conditions usually applied for cultivation of said plant or plant cultivar. The fact that the seed has been treated with *Quassia* extract or at least one quassinoid or a composition comprising *Quassia* extract or at least one quassinoid does not make any particular demands on the growing conditions. In particular, a seed may be sowed in an agricultural area, where it will sprout, grow and ripen, provided that nutrients, water and light are sufficiently available.

Since *Quassia* extract or components thereof, in particular quassin, or other quassinoids are at least partially absorbed by the seed, the resulting plant preferably contains components derived from *Quassia* extract or at least one quassinoid. This also protects the emerged seedling and the developing plant from insects, in particular wireworms, grain beetle or cabbage stem flea beetle and their larvae. Optionally, the plant may further contain one or more additional active agents and/or additives, in particular those described hereinabove, such as denatonium benzoate.

The plant may for example be any seedling as described further above.

Seed and plants according to the invention are protected from damage caused by insects, in particular wireworms, in that they are repelled from the seeds or plants due to components derived from *Quassia* extract (quassin) or at least one quassinoid being present on and/or in the seeds or plants. In an agricultural area, these plants will grow better than plants that are grown from untreated seeds.

Thus, a further aspect of the present invention is a method for controlling damage caused by insects on seeds or plants in an agricultural area comprising the following steps:
a) sowing seeds according to the invention or seeds obtained or obtainable according to the method of the invention on an agricultural area, and
b) growing plants from the seeds,
wherein one or both steps a) and b) are performed under conditions of infestation with insects,
wherein the plant stand count on said agricultural area is higher than under the same conditions on a comparable agricultural area with untreated seeds or plants grown from untreated seeds.

The seed sowed in step (a) need not be treated with *Quassia* extract or at least one quassinoid or the composition comprising *Quassia* extract or at least one quassinoid immediately before sowing, but seed may be used which has been treated and then stored at some earlier stage.

The conditions for growing the plant in step b) correspond to those usually applied in cultivation. The fact that the seed has been treated with *Quassia* extract or at least one quassinoid or a composition comprising *Quassia* extract or at least one quassinoid does not make any particular demands on the growing conditions.

*"Stand counts"* analyze the number of plants or crops on a field or a specific area on the field. In a preferred embodiment, the plant stand count on said agricultural area under conditions of infestation with insects is at least 5% or at least 10%, preferably 20% and more preferably at least 30% higher than that obtained under the same conditions on a comparable agricultural area with untreated seeds or plants grown from untreated seeds.

The term *"comparable agricultural area" with untreated seeds or plants grown from untreated seeds"* refers to an area where plants are grown under the same conditions (e.g. with regard to soil conditions, light, water, nutrients, etc.), also under infestation with insects, the only difference being that the seeds or plants grown from untreated seeds have not been subjected to any treatment to protect it from insects.

The invention shall be further illustrated by the following examples.

### Examples

Prior experiments indicated that *Agriotes spp.* avoid bitter tasting seedlings and seeds. As we are facing a decline in registered active substances and pesticide products in the EU, an active search for alternatives is needed. The supplier of Quassia extract has applied for a registration as basic substance that would allow the use of the product on seeds. Further, *Quassia* extract is already registered and qualified for organic production in Switzerland.

### 1. Seed treatment with Quassia extract

In the experiment, a dosage of 100g Quassia extract (Trifolio-M) has been mixed in a slurry with standard products Redigo M (Fungicide; application rate 15,9g/ U), Peridiam Quality 316 (Sticker; application rate 31,8 g/U) and water to prepare a slurry for seed treatment.

The above treated seeds have been sown in small pots with standard pot soil and *2 Agriotes spp.* larvae per pot. Reference treatments included the insecticide Force 20 CS (Tefluthrin) and the banned Neonicotinoid Sonido (Thiacloprid). Each variant has been replicated 24 times. To mimic field conditions for growing and wireworm attack, the day and night temperatures changed from 18°C (daytime) to 12°C (night). Evaluation has been done 18 days after sowing and included the wireworm density in the pot, wireworm damage on seeds and roots, plant stand counts and the biomass measurement. Results showed a significant increase in emergence and biomass of *Quassia* treatment compared to control and a significant reduction on feeding damage (Table 1).

The very high wireworm survival rate (89.58%; Table 1) indicates that the effect of *Quassia* extract on corn seeds is a repellent effect rather than an insecticidal effect.

The profile of the substance consolidating a natural origin, high efficacy, high survival rate of the target pest leads to a high likelihood to be used in the field.

**Table 1. Comparison of treatments to untreated control (no wireworms) and the control (untreated seeds; with wireworms)**

| **Treatment No.** | **Treatment** | **Wireworm (%)** | **Emergence (%)** | **Biomass (g)** | **Plants with feeding damage on seed (%)** |
|---|---|---|---|---|---|
| 1 | Untreated control | - | 100 | 3.72 | 0.00 |
| 2 | Control | 66.67 | 54.17 | 0.70 | 100.00 |
| 3 | *Quassia* Extract | 89.58 | 95.83 | 2.56 | 41.67 |
| 4 | Force 20 CS | 64.58 | 100.00 | 2.84 | 12.50 |
| 5 | Sonido | 60.42 | 95.83 | 3.19 | 12.50 |

Further, *Quassia* extract (Trifolio-M) has been tested in concentrations of 50g / 50.000 seeds, 100 g / 50.000 seeds and 200 g / 50.000 seeds in corn. Repellent effects has been observed with all of these concentrations.

The active ingredient Quassin in Quassan has the main influence on insect repellent effect. We tested already two products (different formulations): Quassan (liquid formulation) and Quassia extract (powder formulation).

### 2. Preparation of compositions for treating sorghum and corn

### Compositions for treating sorghum (1 u = 250,000 grains = 7,5 Kg at thousand kernel weight of 30 g)

MaximXL, FKL orange, Quassan are added at first, and then water is added. The mixture is stirred until homogenized. Slurry is processed immediately. After adding stain with Demeril orange the composition is powdered.

| Compounds | Concentration (ml/u) | Concentration (g/u) |
|---|---|---|
| MaximXL | 10.5 | 11.0 |
| FKL orange | 17.8 | 20.6 |
| Quassan | 1.0-10.0 | 1.0-10 |
| Water | 41.7 | 41.7 |
| Slurry | 71-80 | 74.3-83.3 |
| Demeril orange | # | 10.3 |

MaximXL, FKL orange, and water are mixed. The mixture is stirred until homogenized. The respective amount of Quassia extract is added and the mixture is entensively stirred for 5 minutes. Slurry is processed immediately. After adding stain with Demeril orange the composition is powdered.

| Compounds | Concentration (ml/u) | Concentration (g/u) |
|---|---|---|
| MaximXL | 10.5 | 11.0 |
| FKL orange | 17.8 | 20.6 |
| Quassia extract | | 6.0-10 |
| Water | 46.7 | 46.7 |
| Slurry | 75 | 84.3-88.3 |
| Demeril orange | # | 10.3 |

### Compositions for treating corn (1 u = 50,000 grains = 15 Kg at thousand kernel weight of 300 g)

RedigoM, Peridiam316, and Quassan are added at first, and then water is added. The mixture is stirred until homogenized. Slurry is processed immediately. After adding stain with Demeril colourless the composition is powdered.

| Compounds | Concentration (ml/u) | Concentration (g/u) |
|---|---|---|
| RedigoM | 15.0 | 15.9 |
| Peridiam 316 | 30.0 | 31.8 |
| Quassan | 10.0 | 10 |
| Water | 180.0 | 180 |
| Slurry | 225.0 | 237.7 |
| Demeril colourless | # | 5 |

RedigoM, FKL orange, and water are mixed. The mixture is stirred until homogenized. The respective amount of Quassia extract is added and the mixture is entensively stirred for 5 minutes. Slurry is processed immediately. After adding stain with Demeril colourless the composition is powdered.

| Compounds | Concentration (mL/u) | Concentration (g/u) |
|---|---|---|
| RedigoM | 15.0 | 15.9 |
| Peridiam 316 | 30.0 | 31.8 |
| Quassia extract | - | 50-200 |
| Water | 210 | 210 |
| Slurry | 225.0 | 308-458 |
| Demeril colourless | # | 10 |

The quassan used in the test is a commercial product, which contains 30% of quassia extract (cf. https://www.biocontrol.ch/de_bc/quassan).

## Claims

1. A seed treated with *Quassia* extract or at least one quassinoid or a composition comprising *Quassia* extract or at least one quassinoid, wherein the *Quassia* extract or components of the extract, or at least one quassinoid, in particular quassin, is adsorbed on the seed and/or absorbed into the seed.

2. The seed according to claim 1, wherein the seed is coated with *Quassia* extract or at least one quassinoid or a composition comprising *Quassia* extract or at least one quassinoid, optionally in combination with one or more further active agents and/or additives.

3. The seed according to claim 2, wherein the further active agents are selected from phytochemicals and antimicrobial agents, in particular bactericides, antiparasitics and fungicides, such as metalaxyl, metalaxyl-M, ipconazole, thiram, zirame, fludioxonil, prothioconazole, and combinations thereof, preferably Redigo M, Maxim XL, Maxim Quattro, Lumiflex, Thiram and/or Korit; and/or
wherein the additives comprise sticking agents, preferably sticking agents based on natural resins, sticking agents based on lignin sulfonate, sticking agents based on polymers and/or water-based sticking agents such as Sepiret^{®}, Peridiam^{®} Quality, Peridiam^{®} Active, FKL^{®}, Disco L-450; Disco L-1101, Agifix, or FKL (FMC).

4. The seed according to any one of the preceding claims, wherein quassinoids, in particular quassin, are present in an amount effective to provide protection against damage caused by insects, in particular wireworms, grain beetle or cabbage stem flea beetle.

5. The seed according to any one of the preceding claims, wherein the germination capacity of the seed is comparable with untreated seed.

6. A plant or a part thereof grown from the seed according to anyone of claims 1 to 5, in particular wherein the plant or a part thereof contains components of *Quassia* extract, in particular quassin, and/or or at least one other quassinoid and optionally in addition one or more further active agents and/or additives, preferably as defined in claim 3, in particular denatonium benzoate.

7. Use of *Quassia* extract or at least one quassinoid for protecting seed or plant, preferably a seedling, from damage caused by insects, optionally in combination with one or more further active agents and/or additives, preferably as defined in claim 3, in particular denatonium benzoate.

8. Method of protecting a seed against damage caused by insects, the method comprising contacting the seed with Quassia extract or at least one quassinoid or a composition comprising Quassia extract or at least one quassinoid, optionally in combination with one or more further active agents and/or additives, preferably as defined in claim 3, in particular denatonium benzoate.

9. The method according to claim 8, wherein *Quassia* extract or at least one quassinoid is used in an amount of 5 to 500g/50,000 seeds, 10 to 300g/50,000 seeds, or 30 to 150g per 50,000 seeds, in particular 50 to 200g per 50,000 seeds.

10. The method according to claim 8 or 9, wherein *Quassia* extract or at least one quassinoid or the composition comprising *Quassia* extract or at least one quassinoid is used as a solid powder or as a liquid composition further comprising a sticking agent.

11. The method according to claim 10, wherein the liquid composition comprises *Quassia* extract Quassin.

12. A method of providing a plant protected against damage caused by insects, the method comprising
a) providing a seed according to any one of claims 1-5 or a seed obtained or obtainable according to the method of any one of claims 8-11, and
b) growing a plant from the seed of a).

13. The method according to claim 12, wherein the plant in step b) is a plant according to claim 6.

14. Method for controlling damage caused by insects on seeds or plants in an agricultural area, comprising the following steps:
a) sowing seeds according to any one of claims 1-5 or seeds obtained or obtainable according to the method of any one of claims 8-11 on an agricultural area, and
b) growing plants from the seeds,
wherein one or both steps a) and b) are performed under conditions of infestation with insects and/or insect larvae;
wherein the plant stand count on said agricultural area is higher than under the same conditions on a comparable agricultural area with untreated seeds or plants grown from untreated seeds,
in particular wherein the plant stand count on said agricultural area is at least 5% or at least 10%, preferably at least 20% and more preferably at least 30% higher than on a comparable agricultural area with untreated seeds or plants grown from untreated seeds.

15. Seed treatment composition, comprising *Quassia* extract or at least one quassinoid and at least one sticking agent, optionally in combination with one or more further active agents, wherein sticking agents and further active agents are preferably as defined in claim 3.
